# EUROPEAN PATENT APPLICATION

(11) **EP 1 712 300 A1**
(43) Date of publication of application: **18.10.2006**
(21) Application number: 05008022.5
(22) Date of filing: 13.04.2005
(51) Int. Cl.: B05D 7/14, B05D 7/00

(54) **Method for coating metal surfaces with corrosion inhibiting polymer layers**

(71) Applicant: Enthone Inc., West Haven, Connecticut 06516 (US)
(72) Inventor: Mertens, Marc L. A. D., Dr., 5342 AZ Oss (NL); van Schaik, Renè, Ing., 5625 Ha Eindhoven (NL)
(74) Representative: Stenger, Watzke & Ring

(57) **Abstract**

This invention relates to a method for coating metal surfaces with corrosion inhibiting polymer layers. According to the invention a metal surface is coated with a polymer layer for inhibiting the corrosion of the surfaces by the subsequent steps: contacting the metal surface with a solution comprising an acid, wherein the acid comprises phosphor in oxidation state + 3 and an alkyl group, wherein the alkyl group can interact with a plastic monomer or polymer, and contacting the acid solution treated metal surface of step with a solution comprising monomeric or polymeric resins or a mixture of monomeric and polymeric resins, wherein the monomeric and/or polymeric resins are able to interact with a carboxylic group of the acid used in the first step. By the subsequent steps an adherent sealing layer is build on the metal surface.

## Description

This invention relates to a method for coating metal surfaces with corrosion inhibiting polymer layers.

To protect metal surfaces from corrosion it is known from the state of the art to coat metal surfaces with a conversion layer precipitated from a chromium (III) or (VI) containing electrolyte. Such processes are well-known and widely used in industry like automobile industry and other. Such chromium coated metal surfaces showing good resistance against corrosion. But, due to the negative environmental effects of chromium (VI) the use of chromium containing electrolytes, especially chromium (VI) electrolytes are to be avoided.

It is therefore one object of the invention to provide a corrosion inhibiting coating for metal surfaces which is totally free of chromium while showing the same corrosion inhibiting abilities than chromium conversion layers.

This object is solved by a method according to claim 1.

Phosphorus in oxidation state +3 can interact with the oxide surface of metal substrates by hydrogen bonding. The alkyl group of the used phosphorus containing acid did not participate in bonding with the metal surface and therefore is free to react with a monomeric or polymeric resin. Such resin will build a polymer coating on the surface sealing the surface from corrosion. The polymer coating is anchored to the metal surface by hydrogen bonding between the phosphorus of the acid and the oxides on the metal surface.

Surprisingly it could be found that beneath other phosphonic acids showing the best interaction between the phosphorus-core of the acid and the oxides of the surface. As appropriate alkyl group for reaction with wide range of monomeric and/or polymeric resin a vinyl group was identified.

Therefore, the most useful acid for carrying out the method according to these invention is, beneath others, vinyl phosphonic acid (VPA).

Appropriate monomeric or polymeric resin are resins according to the following general structures:

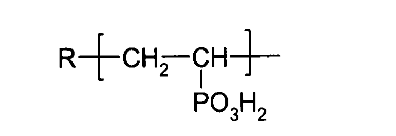

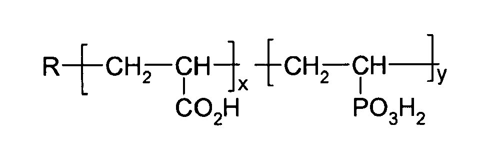

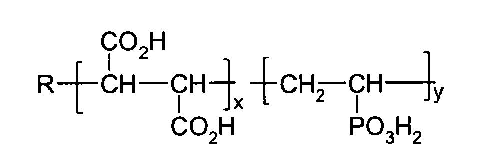

Wherein R is a H, alkyl, ethoxyalkyl, propoxyalkyl or OH-Group and x, y representing Mole-%.

The typical molecular weight is in preferably in the range between 25000 and 100000. The polymers shown in theire acid forms above can also be utilised as partly or completely neutralised sodium or potassium salt.

The polymers can also be polymerised with an alternative vinyl-phosphonate polymer.

In practice, the method according to the invention is carried out by several subsequent dipping an drying steps intermitted by rinsing steps. A typical procedure for example is:
1. pretreating the surface
2. rinsing
3. alkaline zinc plating
4. rinsing
5. dipping in a vinyl phosphonic acid (VPA) containing solution
6. drying
7. dipping in a monomeric and/or polymeric resin containing solution
8. drying.

The following embodiments showing examples for the invention, which is not limited to these embodiments.

### Example 1: VPA-solution

2 % solid material dissolved in water, type: 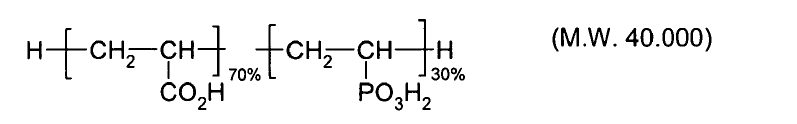 pH adjusted to pH = 2 with sodiumhydroxide and/or phosphoric acid.

### Example 2: Seal solution

10 % solids polyethylene wax with differing MW, emulsified with anionic tensides, pH corrected to 9,2 with sodiumhydroxide and/or acetic acid.

### Example 3: Sequence 1

- Zinc plating 10 µm average with standard acid or alkaline electrolyte. In this case specific "ENTHOBRITE NCZ Dimension" according to datasheet conditions.
- Cascade water rinse (2 x 1 minute).
- Immersion in VPA solution (Exp. 1) at room temperature for 30 seconds with mild agitation.
- Drying in oven for 10 minutes at 80°C.
- Immersion in Seal solution (Exp. 2) at room temperature for 30 seconds (allow excessive seal to drip-off).
- Drying in oven for 10 minutes at 80°C.

## Claims

1. Method for coating metal surfaces with a polymer layer inhibiting the corrosion of the surface, **characterised by** the subsequent steps:
(a) contacting the metal surface with a solution comprising an acid, wherein the acid comprises phosphor in oxidation state + 3 and an alkyl group, wherein the alkyl group can interact with a plastic monomer or polymer, and
(b) contacting the acid solution treated metal surface of step (a) with a solution comprising monomeric or polymeric resins or a mixture of monomeric and polymeric resins, wherein the monomeric and/or polymeric resins are able to interact with a carboxylic group of the acid used in step (a).
to build an adherent sealing layer on the metal surface.

2. Method according to claim 1, wherein the acid of step (a) is a phosphonic acid derivate.

3. Method according to one of the claims 1 or 2, wherein the alkyl group of the acid of step (a) is a vinyl group.

4. Method according to one of the claims 1 or 3, wherein the acid used in step (a) is a vinyl phosphonic acid.

5. Method according to one of the claims 1 or 4, wherein the monomeric and/or polymeric resin used in step (b) is at least one resin of the group consisting of polyethylene (waxes), polyacrylates, polamines, polyamides, urethane, polyether, polyester and polysilicates or a mixture of these.

## Amended claims

### Amended claims in accordance with Rule 86(2) EPC.

**1.** Method for coating metal surfaces with a polymer layer inhibiting the corrosion of the surface, **characterized by** the subsequent steps:
a) contacting the metal surface with the vinyl phosphonic acid solution,
b) contacting the acid solution treated metal surface of step (a) with the solution comprising at least one monomer and/or polymeric resins of the group consisting of polyethylene (waxes), polyacrylates, polyamines, polyamides, urethane, polyether, polyester and polysilicates or mixtures of these
to build an adherent sealing layer on the metal surface.

**2.** Method according to claim 1, wherein the monomeric and/or polymeric resin used in step(b) is a least one resin of the group consisting of polyethylene (waxes), polyacrylates, polyamines, polyamides, urethane, polyether, polyester and polysilicates or a mixture of these.
